# EUROPEAN PATENT APPLICATION

(11) **EP 4 059 679 A1**
(43) Date of publication of application: **21.09.2022**
(21) Application number: 20887638.3
(22) Date of filing: 08.07.2020
(51) Int. Cl.: B27N 3/08, B28B 3/02, C08L 97/00, C04B 14/06, C04B 18/08, C04B 18/14, C04B 18/16, C04B 26/28

(54) **CURED ARTICLE AND METHOD FOR MANUFACTURING SAME**

(30) Priority: 12.11.2019 JP 2019204933
(71) Applicant: Bioapatite, Inc., Hikone-city, Shiga, 522-0068 (JP); The University of Tokyo, Bunkyo-ku Tokyo 113-8654 (JP)
(72) Inventor: SAKAI Yuya, Tokyo 113-8654 (JP); NAKAMURA Koichi, Hikone-city, Shiga 5220068 (JP); SAKAI Yuki, Hikone-city, Shiga 5220068 (JP); KAWAMOTO Masahiro, Hikone-city, Shiga 5220068 (JP)
(74) Representative: Gill Jennings & Every LLP
(86) International application number: PCT/JP2020/026768
(87) International publication number: WO 2021/095297

(57) **Abstract**

Provided is a novel cured article that enables to expand the use of debris and the like as well as the use of plant biomass. The cured article contains an inorganic material and at least one selected from lignin and cellulose.

## Description

### TECHNICAL FIELD

The present invention relates to a cured article and a method of producing the same.

### BACKGROUND ART

Cement is a principal material of concrete used in the fields of construction and civil engineering, and calcination of limestone in the cement production generates a large amount of CO₂, which accounts for 5% of CO₂ emissions of all industries. Therefore, a reduction in the use of cement leads to a reduction in CO₂ emissions. Further, structures using concrete generate debris when dismantled and removed due to aging. Much of the debris is crushed and then reused as a recycled roadbed material or a recycled crushed stone laid as a building foundation. Attempts have also been made to reuse such debris as an asphalt mixture or a recycled aggregate. However, even when reused, the majority of the debris is used as a substitute for gravel and laid as a building foundation, a road or the like. Such use is not desirable from the viewpoint of recycling of resources, and it is desired to utilize the debris as construction material. Aggregates are removed from some of the debris and reused as recycled aggregates in the production of recycled concrete. However, concrete using recycled aggregate has poor mechanical performance and durability; therefore, the use of such concrete is limited at present. In addition, since the production of recycled concrete requires fresh cement, it does not lead to a reduction in CO₂ emissions associated with the cement production. The reuse of debris as construction material contributes to resource conservation, prevention of global warming, and realization of a recycling society.

Moreover, paper mills, wood factories, and vegetable factories generate large amounts of plant-derived waste. A portion of the plant-derived waste is utilized as compost; however, the plant-derived waste is often disposed of as industrial waste at present, and it is aimed to expand the use of plant biomass for recycling such plant-derived waste.

With regard to a composition that contains an aggregate and vegetable fibers, there has been disclosed a high-strength water-permeable resinous paving composition in which a thermosetting resin is used as a binder of granular aggregate and a vegetable fibrous material of cellulose or a derivative thereof is used as an additive of the thermosetting resin (Patent Document 1). However, the composition disclosed in Patent Document 1 is used as a water-permeable resinous paving material for paving roads and the like; therefore, such use is not different from the conventional recycle use of debris and does not offer a novel application. In addition, the composition disclosed in Patent Document 1 is water-permeable and thus porous, and does not have a sufficient strength to be used as a building material. Moreover, in Patent Document 1, the thermosetting resin such as an epoxy resin is used as a binder, and cellulose, which is used as an additive for increasing the viscosity of the thermosetting resin and allowing surface-to-surface adhesion between aggregate components, is not for generating an adhesive force.

### RELATED ART DOCUMENT

### PATENT DOCUMENT

[Patent Document 1] JPH06-227849A

### SUMMARY OF THE INVENTION

### PROBLEMS TO BE SOLVED BY THE INVENTION

In view of the above, an object of the present invention is to provide: a cured article that enables to expand the use of debris and the like as well as the use of plant biomass; and a method of producing the same.

### MEANS FOR SOLVING THE PROBLEMS

The present inventors intensively studied to solve the above-described problems and consequently discovered that a heat-cured article containing an inorganic material and at least one selected from lignin and cellulose has a sufficient strength as a building material or the like, thereby arriving at the present invention.

That is, the present invention encompasses the followings.
[1] A water-impermeable cured article, containing:
   an inorganic material; and
   at least one selected from lignin and cellulose.
[2] The water-impermeable cured article according to [1], wherein the at least one selected from lignin and cellulose is derived from a plant.
[3] The water-impermeable cured article according to [1] or [2], wherein the inorganic material contains a calcium compound.
[4] The water-impermeable cured article according to any one of [1] to [3], wherein the inorganic material contains particles of at least one selected from cement concrete, sand, slag, and fly ash.
[5] A heat-cured article, containing:
   an inorganic material; and
   at least one selected from lignin and cellulose.
[6] A method of producing a cured article, the method including:
   mixing an inorganic material with a raw material comprising at least one selected from lignin and cellulose; and
   heating the resulting mixture.
[7] A method of producing a cured article, the method including:
   mixing an inorganic material with a raw material containing at least one selected from lignin and cellulose; and
   pressurizing the resulting mixture.
[8] The method of producing a cured article according to [6] or [7], wherein water is added to the inorganic material and the raw material containing at least one selected from lignin and cellulose.
[9] The method of producing a cured article according to any one of [6] to [8], wherein pressurization is performed with heating.
[10] The method of producing a cured article according to [6], wherein the heating temperature is 140 to 240°C.
[11] A building material, including the water-impermeable cured article according to any one of [1] to [4].
[12] A building material, including the heat-cured article according to [5].

### EFFECTS OF THE INVENTION

The cured article of the present invention contains at least one selected from lignin and cellulose. The cured article of the present invention has a high strength and can be used as, for example, building materials (including construction materials), such as pillars, wall materials, floor materials, core materials, tiles, pavement materials, blocks, fences, and roofing materials. Lignin and cellulose, which are raw materials, can be obtained from, for example, a plant-derived waste or residue that is discharged from a paper mill, a wood factory, a vegetable factory or the like, and a waste material of concrete or the like can be used as the inorganic material, both of which can contribute to recycling.

The method of producing a cured article according to the present invention can certainly yield the above-described cured article.

### BRIEF DESCRIPTION OF THE DRAWINGS

[FIG. 1] FIG. 1 is an SEM image showing the inside of a cured article of the present invention.
[FIG. 2] FIG. 2 is an SEM image showing the vicinity of the surface of a cured article of the present invention.
[FIG. 3] FIG. 3 is an exterior photograph of the heat-cured articles obtained in Example 5.
[FIG. 4] FIG. 4 is a graph showing the bending strength of the heat-cured articles obtained in Example 5.
[FIG. 5] FIG. 5 is an exterior photograph of the heat-cured articles obtained in Example 6.
[FIG. 6] FIG. 6 is a graph showing the bending strength of the heat-cured articles obtained in Example 6.
[FIG. 7] FIG. 7 is an exterior photograph of each inorganic material used in Example 7.
[FIG. 8] FIG. 8 is an exterior photograph of the heat-cured articles obtained in Example 7.
[FIG. 9] FIG. 9 is a graph showing the bending strength of the heat-cured articles obtained in Example 7.
[FIG. 10] FIG. 10 is an exterior photograph of the heat-cured articles obtained in Example 8.
[FIG. 11] FIG. 11 is a graph showing the bending strength of the heat-cured articles obtained in Example 8.
[FIG. 12] FIG. 12 is an exterior photograph of the heat-cured articles obtained in Example 9.
[FIG. 13] FIG. 13 is a graph showing the bending strength of the heat-cured articles obtained in Example 9.
[FIG. 14] FIG. 14 is an exterior photograph of the heat-cured articles obtained in Example 10.
[FIG. 15] FIG. 15 is a graph showing the bending strength of the heat-cured articles obtained in Example 10.

### MODE FOR CARRYING OUT THE INVENTION

The cured article of the present invention and a method of producing the same will now be described more concretely.

The cured article of the present invention contains an inorganic material and at least one selected from lignin and cellulose.

By the studies conducted by the present inventors, it was found that a cured article having a high strength can be unexpectedly obtained when lignin or cellulose is mixed with an inorganic material, such as concrete or sand, and the resultant is heated or pressurized. It was also found that a heat-cured article having a higher strength can be obtained by mixing a raw material containing lignin and/or cellulose with an inorganic material, such as concrete or sand, and subsequently thermally curing the resultant by heating with pressurization. As a raw material of lignin or cellulose, for example, wood chips or sawdust, plant stems, leaves or the like, or a plant-derived waste or residue can be used, and a construction/civil engineering waste can be used as the concrete, sand or the like. It was unthinkable that a unique cured article can be obtained by pressurizing or heating and pressurizing those raw materials that have conventionally not been necessarily utilized effectively in many cases. The cured article is also expected to be used as a substitute for mortar and concrete among building materials and, while a large amount of CO₂ is generated by calcination of limestone in the production of cement as a raw material of mortar and concrete, the cured article of the present invention contributes to a reduction of CO₂ emissions during the production of the raw material.

Further, although lignin sulfonate-based materials have conventionally been used as water reducing agents and the like in concrete admixtures, it was unthinkable that a unique cured article can be obtained by pressurizing or heating and pressurizing lignin and an inorganic material as in the present invention.

A curing action is not necessarily clear; however, describing, as an example, curing achieved by a hot-pressing reaction using a plant-derived waste or residue as a material of lignin, it is believed that superheated steam generated from the plant-derived waste or residue causes lignin to react at a low temperature while maintaining its skeleton and act synergistically with a consolidation effect, whereby a heat-cured article can be produced. A thermal curing reaction proceeds with induction of reaction active sites between phenolic polymers contained in lignin and the like. In other words, from the viewpoint of the resulting cured article, it is believed that a cured article having a high hardness is obtained by thermal curing of lignin.

Further, cellulose, which is a polysaccharide contained in various plants, exhibits an adhesive action and thus functions as a binder, and it is believed that a cured article having a high hardness is obtained by incorporating cellulose into the cured article of the present invention.

The cured article of the present invention is cured by heating, cured by pressurization, or thermally cured by heating with pressurization. A wood material becomes fluid when pressurized; therefore, by pressurizing the wood material, a dense and highly strong cured article in which gaps are mostly filled can be obtained. In addition, since a wood material becomes fluid when pressurized with heating, a cured article having a complex shape can also be produced therefrom with ease. Curing takes time when carried out at normal temperature; however, a cured article can be produced in a short period by thermal curing.

Further, in this respect as well, the cured article of the present invention can provide a dense and highly strong cured article when it is pressurized during the production.

Lignin and cellulose both have so-called biodegradability in that they can be degraded by specific microorganisms. Accordingly, the cured article of the present invention is not biodegraded during its use as a building material; however, when the cured article is disposed of after the use due to the end of working life or the like, lignin or cellulose can be biodegraded by microorganisms living in the soil. Therefore, the cured article of the present invention has an effect of reducing the risk of environmental contamination. In addition, since inorganic materials remaining after the biodegradation are debris, sand and the like, they do not generate any hazardous substance even when disposed of, and can be reused as the cured article of the present invention and the like if necessary.

When the cured article of the present invention contains lignin, the lignin is not particularly restricted, and examples thereof include lignin derived from wood chips, more specifically lignin derived from cedar chips, cypress chips, hardwood chips, and softwood chips. In addition to lignin derived from wood chips, examples also include lignin derived from gramineous plants such as bamboos. As a raw material, a high-purity lignin or simple lignin, a lignin-containing plant such as kenaf, a waste or residue of plant leaves, stems and the like that is discharged from a plant factory, or a lignin-containing waste or residue discharged from a paper mill may be used. Further, the type of monomer, such as H-type monomer, G-type monomer, or S-type monomer, is not restricted, and the lignin has a structure in which monomers including one or more of these types are polymerized. The lignin may also contain a monomer other than the above-described ones as a polymerization unit. Generally, it is presumed that lignin is contained when a polymerization unit formed by polymerization of at least one of the H-type monomer, the G-type monomer, and the S-type monomer is detected.

When the cured article of the present invention contains cellulose, the cellulose is not particularly restricted, and examples thereof include plant fibers such as cellulose derived from wood chips, more specifically cellulose derived from cedar chips, cypress chips, hardwood chips, and softwood chips. In addition to cellulose derived from wood chips, examples also include cellulose derived from gramineous plants such as bamboos. As a raw material, a high-purity cellulose or simple cellulose, a cellulose-containing plant such as kenaf, a waste or residue of plant leaves, stems and the like that is discharged from a plant factory, or a cellulose-containing waste or residue discharged from a paper mill may be used.

When wood chips or the like is used as a raw material of the cured article of the present invention, it is not necessarily clear whether a curing action is attributed to lignin or cellulose; however, by the experiments conducted by the present inventors, it has been confirmed that lignin contained in wood chips has a curing action and that, even when simple cellulose is used in place of wood chips, a cured article can be obtained by mixing and heat-curing simple cellulose with an inorganic material. Accordingly, the cured article of the present invention contains at least one selected from lignin and cellulose. Nevertheless, according to the experiments conducted by the present inventors, the use of wood chips provided the cured article with a higher strength than the use of simple cellulose; therefore, from the standpoint of strength, the cured article preferably contains at least lignin.

The raw material may be a material in the form of particles or powder such as wood chips, or may be a material dispersed in a liquid. When the raw material is in the form of solid particles or powder, the particle size thereof may be in a broad range of, for example, 0.01 µm to 100 mm or so. When the particle size is smaller than about 0.01 µm, the production cost of the raw material as a fine powder is increased. When the particle size is larger than about 100 mm, the degree of dispersion of the raw material such as wood chips in the cured article is reduced, which is not preferred. For a large-sized building material application, a raw material (e.g. wood chips) having a large particle size can be used.

The particle size and the average particle size of the raw material can be determined by a laser diffraction-scattering method using, for example, a laser diffraction-scattering particle size distribution analyzer LA-960 manufactured by HORIBA, Ltd. However, for large particles of greater than 0.1 mm in size, the particle size can be determined by a sieve method. Further, in the present invention, a material containing lignin or cellulose has a maximum particle size of preferably 0.1 µm to 100 mm, more preferably 1 µm to 50 mm, still more preferably 10 µm to 10 mm. A powder-form material having a prescribed maximum particle size such as wood chips can be obtained by screening a powder used as the material through a sieve. For example, powder-form wood chips having a maximum particle size of 1 mm can be obtained by screening through a sieve having an opening diameter of 1 mm.

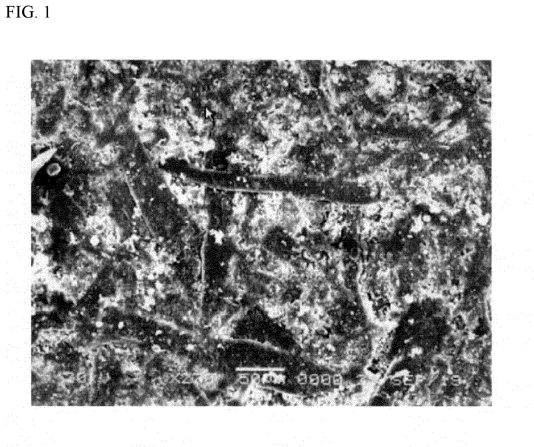

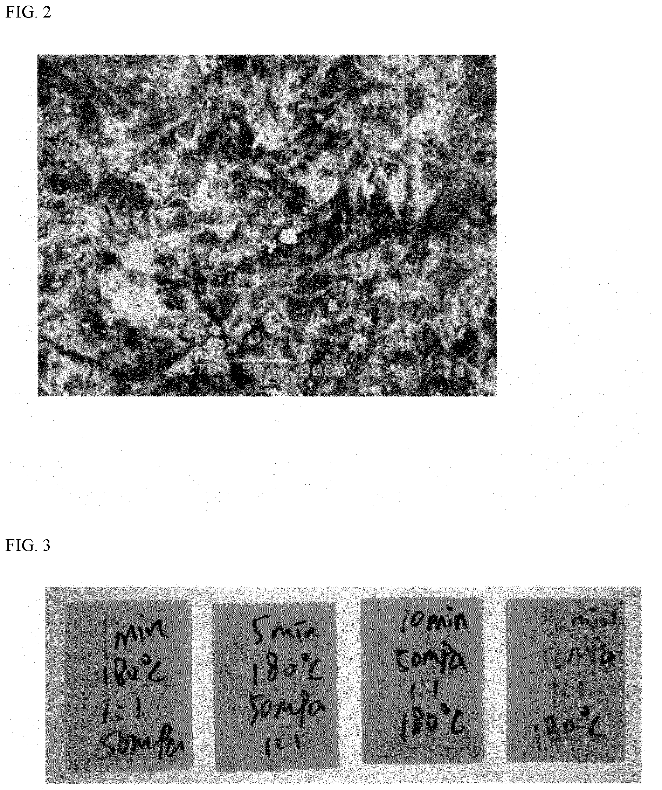

The cured article of the present invention can be considered as a composite material obtained by curing particles of an inorganic material with at least one selected from lignin and cellulose. FIG. 1 shows an SEM image of the inside of a heat-cured article, and FIG. 2 shows an SEM image of the vicinity of the surface of a heat-cured article. In the image showing the inside of the heat-cured article, wood-derived elongated objects can be observed. In the image showing the vicinity of the surface, it can be observed that the wood-derived elongated objects are partially dissolved. The partially dissolved objects are presumed to be lignin, and it is believed that at least one of wood-derived lignin and cellulose, particularly lignin, exhibits an adhesive action in both the inside and the vicinity of the surface.

As the inorganic material of the cured article of the present invention, for example, naturally-occurring inorganic materials such as rocks, gravel and sand, various minerals constituting the naturally-occurring inorganic materials, artificial ceramics, concrete, mortar, concrete debris, mortar waste, slag, fly ash, cement, and crushed or pulverized products thereof can be used. Concrete debris and mortar waste have only been used as substitutes for sand and gravel, and slags, fly ashes and the like are conventionally disposed of, except for some high-quality ones. The use of any of these materials as the inorganic material of the cured article of the present invention contributes to recycling and natural environmental protection. The higher the strength of the inorganic material, the higher the strength of the resulting cured article; therefore, the inorganic material used as a raw material of a cured article suitable for the use as a building material preferably has a certain level of strength.

Among the above-exemplified inorganic materials, those which contain a calcium compound such as calcium carbonate are preferred since they improve the adhesive strength in the production of cured article, so that a cured article having a high strength can be obtained.

The particle size of the inorganic material may be in a broad range of, for example, 0.001 µm to 100 mm or so. When the particle size is smaller than about 0.001 µm, the production cost of the inorganic material as a fine powder is increased. When the particle size is larger than about 100 mm, the degree of dispersion of the inorganic material in the cured article is reduced, which is not preferred. For a large-sized building material application, an inorganic material having a large particle size can be used. Since fine pulverization of debris is costly, the use of unpulverized debris having a large particle size can reduce the production cost of the cured article.

The particle size and the average particle size of the inorganic material can be determined by a laser diffraction-scattering method using, for example, a laser diffraction-scattering particle size distribution analyzer LA-960 manufactured by HORIBA, Ltd. However, for large particles of greater than 0.1 mm in size, the particle size can be determined by a sieve method. Further, in the present invention, the inorganic material has a maximum particle size of preferably 0.1 µm to 100 mm, more preferably 1 µm to 50 mm, still more preferably 10 µm to 10 mm. An inorganic material having a prescribed maximum particle size can be obtained by screening a powder used as the material through a sieve. For example, a powder-form inorganic material having a maximum particle size of 1 mm can be obtained by screening through a sieve having an opening diameter of 1 mm.

In the cured article, the volume ratio of the inorganic material and at least one selected from lignin and cellulose (inorganic material:at least one selected from lignin and cellulose) is preferably in a range of about 95:5 to about 15:85. When the ratio of the inorganic material and at least one selected from lignin and cellulose is about 95:5 or higher, the inorganic material is sufficiently adhered, so that the cured article can be provided with a high strength. When the ratio of the inorganic material and at least one selected from lignin and cellulose is about 15:85 or lower, the inorganic material exists at a sufficient proportion in the cured article, so that the cured article can be provided with a high strength.

Further, in the cured article, the weight ratio of the inorganic material and a material containing at least one selected from lignin and cellulose (inorganic material:at least one selected from lignin and cellulose) is preferably in a range of about 95:5 to about 15:85.

The cured article of the present invention may contain a reinforcing component, such as chitin or calcium carbonate, in addition to the above-described inorganic material and at least one selected from lignin and cellulose. Crustacean exoskeletons can be used as a raw material of chitin, and chicken eggshells can be used as a raw material of calcium carbonate. Crustacean exoskeletons and chicken eggshells are all discharged from food factories and disposed of as waste by landfill. Such crustacean exoskeletons and chicken eggshells that are disposed of as waste can be not only utilized as a reinforcing component to improve the strength of the cured article, but also utilized for recycling. The cured article may further contain other reinforcing material, an adhesive, an adhesive aid, a colorant, and the like. Moreover, in some cases, the cured article contains water that is contained in a raw material or added during the production of the cured article.

The cured article of the present invention has a lightweight, a high strength and a heat resistance, and is thus useful as a building material or the like. In addition, the cured article of the present invention is advantageous for building material application and the like since it has an excellent heat-insulating efficiency because of its low specific heat. Further, as described below, the cured article of the present invention can be produced by the step of pressurization or the step of pressurization with heating; therefore, the cured article of the present invention is suitable for mass production and can be produced not only as products having various shapes using press molds, but also as large-sized products, depending on the size of a press machine. Moreover, since the cured article is biodegradable, even if it is used as a building material or the like and then disposed of as waste by landfill, lignin and cellulose do not remain in the soil over a long time.

One example of the method of producing a cured article according to the present invention will now be described.

A cured article can be produced by, for example, the steps of: mixing particles of an inorganic material with a material containing least one selected from lignin and cellulose; and heating, pressurizing, or pressurizing with heating the resulting mixture. As the inorganic material, as described above, naturally-occurring inorganic materials such as rocks, gravel and sand, various minerals constituting the naturally-occurring inorganic materials, artificial ceramics, concrete, mortar, concrete debris, mortar waste, slag, fly ash, cement, and crushed or pulverized products thereof can be used. Taking into consideration recycling of the inorganic material, it is preferred to use concrete debris, mortar waste, slag, fly ash, or a crushed or pulverized product thereof.

Depending on the use and the functions of a building material to which the cured article is applied, the particle size of the inorganic material can be adjusted as required by crushing or pulverization.

Examples of a lignin-containing material include wood chips, more specifically cedar chips, cypress chips, hardwood chips, and softwood chips. In addition to wood chips, examples of a lignin-containing material also include those derived from gramineous plants, such as bamboo chips. Further, a high-purity lignin or simple lignin, a lignin-containing plant such as kenaf, a waste or residue of plant leaves, stems and the like that is discharged from a plant factory, or a lignin-containing waste or residue discharged from a paper mill may be used as well. In consideration of recycling, it is preferred to use a material derived from wood chips, or a waste or residue discharged from a plant factory or a paper mill. It is also possible to use a lignin-containing industrial residue, or a plant-derived waste or residue discharged from a vegetable grower or a wood factory, such as stems and leaves of vegetables or sawdust.

Such a lignin-containing raw material can be pulverized in advance as required. In addition, in order to avoid effects of water, the lignin-containing raw material may be subjected to a steam heating treatment using an autoclave as required.

Examples of a cellulose-containing material include plant fiber-containing materials such as wood chips, more specifically cedar chips, cypress chips, hardwood chips, and softwood chips. In addition to wood chips, examples of a cellulose-containing material also include those derived from gramineous plants, such as bamboo chips. Further, a high-purity cellulose or simple cellulose, a cellulose-containing plant such as kenaf, a waste or residue of plant leaves, stems and the like that is discharged from a plant factory, or a cellulose-containing waste or residue discharged from a paper mill may be used as well. In consideration of recycling, it is preferred to use a material derived from wood chips, or a waste or residue discharged from a plant factory or a paper mill. It is also possible to use a cellulose-containing industrial residue, or a plant-derived waste or residue discharged from a vegetable grower or a wood factory, such as stems and leaves of vegetables or sawdust.

Such a cellulose-containing raw material can be pulverized in advance as required. In addition, in order to avoid effects of water, the cellulose-containing raw material may be subjected to a steam heating treatment using an autoclave as required.

The particles of the inorganic material and the raw material containing at least one selected from lignin and cellulose are mixed at an appropriate ratio. A mixing means is not particularly restricted, and various mixers can be employed. The mixing means may be a mixer that has a function of crushing the raw material to a prescribed particle size and, in this case, crushing and pulverization of a plant-derived waste or residue as well as mixing of the materials can be performed by a single apparatus.

At the time of the mixing, the volume ratio of the inorganic material and at least one selected from lignin and cellulose (inorganic material:at least one selected from lignin and cellulose) is preferably in a range of about 95:5 to about 15:85. When the ratio of the inorganic material and at least one selected from lignin and cellulose is about 95:5 or higher, the inorganic material is sufficiently adhered, so that a cured article having a high strength can be obtained. When the ratio of the inorganic material and at least one selected from lignin and cellulose is about 15:85 or lower, the inorganic material exists at a sufficient proportion in the resulting cured article, so that a cured article having a high strength can be obtained.

Further, at the time of the mixing, the weight ratio of the inorganic material and at least one selected from lignin and cellulose (inorganic material:at least one selected from lignin and cellulose) is preferably in a range of about 95:5 to about 15:85.

Water may be added at the time of obtaining a mixture of the inorganic material and at least one selected from lignin and cellulose. When a solid material such as wood chips is used as a raw material of at least one selected from lignin and cellulose, an addition of water not only enables to sufficiently mix the solid material with the inorganic material, but also makes it easier to mold the resulting mixture into a prescribed shape and allows superheated steam generated from a plant-derived waste or residue to facilitate lignin to react at a low temperature while maintaining its skeleton during the heating and pressurization performed in the subsequent step. However, the cured article does not necessarily require water. The added water is evaporated during the heating in the subsequent step.

The mixture is heated, pressurized, pressurized and then heated, or pressurized with heating to obtain a cured article of a prescribed shape.

The pressurization may be performed at normal temperature. When the mixture is heated, the heating temperature is preferably set at about 140 to 240°C. In a range of 140 to 240°C, when the mixture contains chitin of eggshells or cellulose and hemicellulose that are fiber components of a plant-derived waste or residue, the cellulose and hemicellulose are also pyrolyzed to exert an adhesive effect, and superheated steam generated from the plant-derived waste or residue causes lignin to react and act synergistically with a consolidation effect, whereby a cured article can be produced. The heating temperature is more preferably 160 to 200°C.

The pressure applied during the pressurization or the pressurization with heating varies depending on the intended use of the resulting cured article; however, a sufficient strength can be obtained with a pressure of about 5 to 50 MPa. A cured article having a higher strength can be obtained with a higher pressure. There is no particular upper limit of the pressure and, for example, even a pressure of about 300 to 400 MPa can be applied depending on the capacity of a pressurizing apparatus.

Although the heating/pressurization time varies depending on the size of the desired cured article, it can be set at, for example, 1 to 60 minutes. The heating/pressurization time is preferably 5 minutes or longer.

The pressurizing apparatus is not particularly restricted. An apparatus used for the pressurization with heating is not particularly restricted as long as it is capable of heating the mixture to a prescribed temperature while pressurizing, and an apparatus equipped with a mold that can form a cured article into a prescribed shape is particularly preferred. Further, such a pressurizing apparatus may be combined with the above-described apparatus used for mixing to construct a cured article production apparatus.

After the heating and press molding, the thus obtained cured article is cooled to 40 to 50°C or lower. For the cooling, an air blower or the like may be used, and the cooling may be performed by using any apparatus that is capable of cooling the cured article to 40 to 50°C or lower, or by heat transfer from a water-cooling jacket. A cooling temperature of higher than the above-described temperature may lead to a reduction in the adhesive effect, causing a reduction in the hardness. The cooling time is preferably about 30 to 60 minutes. Rapid cooling may cause cracking and the like on the surface of the produced cured article, resulting in a reduction in the hardness.

On the surface of the thus obtained cured article, for example, a waterproof coating film can be formed.

### EXAMPLES

### (Example 1)

Crushed cement concrete (maximum particle size = 0.3 mm) in an amount of 5.64 g was mixed with 10.15 g of cedar chips (average particle size = 0.5 mm, water content = 10%). In this process, the volume ratio of the cement concrete and the cedar chips (cement concrete:cedar chips) was 25:75. The resulting mixture was put into a flat plate press mold and hot-pressed for 30 minutes at 160°C and 50 MPa, whereby a plate-form heat-cured article of 4.55 mm in height, 47.70 mm in width, and 49.80 mm in length was obtained.

The thus obtained heat-cured article was subjected to a three-point bending test in which support rods were arranged at the positions of 5 mm from edges and a load was applied to the center of the heat-cured article. As a result, the bending strength was measured to be 23.0 MPa, and the heat-cured article had a practically sufficient strength as a building material.

### (Example 2)

A heat-cured article of 4.48 mm in height, 47.80 mm in width and 49.90 mm in length was obtained in the same manner as in Example 1, except that cypress chips (maximum particle size = 0.178 mm, water content = 10%) were used in place of the cedar chips. As a result of subjecting the thus obtained heat-cured article to the same three-point bending test as in Example 1, the bending strength was measured to be 18.1 MPa.

### (Example 3)

Crushed cement concrete (maximum particle size = 0.3 mm) in an amount of 11.82 g was mixed with 6.77 g of cellulose powder. In this process, the volume ratio of the cement concrete and the cellulose powder (cement concrete:cellulose powder) was 50:50. The resulting mixture was put into a flat plate press mold and hot-pressed for 30 minutes at 160°C and 50 MPa, whereby a plate-form heat-cured article of 4.55 mm in height, 47.70 mm in width, and 49.80 mm in length was obtained.

As a result of subjecting the thus obtained heat-cured article to the same three-point bending test as in Example 1, the bending strength was measured to be 28.05 MPa, and the heat-cured article had a practically sufficient strength as a building material.

### (Example 4)

As Example 4, the mixture of cement concrete and cedar chips that was prepared in Example 1 was put into a flat plate press mold and pressed for 30 minutes at normal temperature and 50 MPa without heating, whereby a plate-form cured article of 6 mm in height, 60 mm in width, and 50 mm in length was obtained.

As a result of subjecting the thus obtained cured article to the same three-point bending test as in Example 1, the bending strength was measured to be 2.4 MPa.

### (Comparative Example 1)

As Comparative Example 1, a mixture was prepared in the same manner as in Example 1, except that 11.79 g of a lignin sulfonate-based admixture was mixed in place of the cedar chips. In this process, the volume ratio of the cement concrete and the lignin sulfonate-based admixture (cement concrete:lignin sulfonate-based admixture) was 35:65. The mixture was put into a flat plate press mold and hot-pressed for 30 minutes at 160°C and 50 MPa; however, the resulting article only had a strength that resulted in collapse of the article at the time of removal from the press mold, and utilization thereof as a building material was thus difficult.

### (Example 5)

Crushed cement concrete (a concrete waste that was crushed using a concrete crusher and further ground using a vibration grinder into a powder having a maximum particle size of 0.3 mm) in an amount of 8.00 g was mixed with 8.00 g of cedar chips (maximum particle size = 0.5 mm, water content = 10%). When the resulting mixture was put into a flat plate press mold and hot-pressed at 180°C and 50 MPa for 1 minute, 5 minutes, 10 minutes, or 30 minutes, a plate-form heat-cured article of about 5.00 mm in height, about 50.00 mm in width, and about 65.00 mm in length was obtained with all of these heating times.

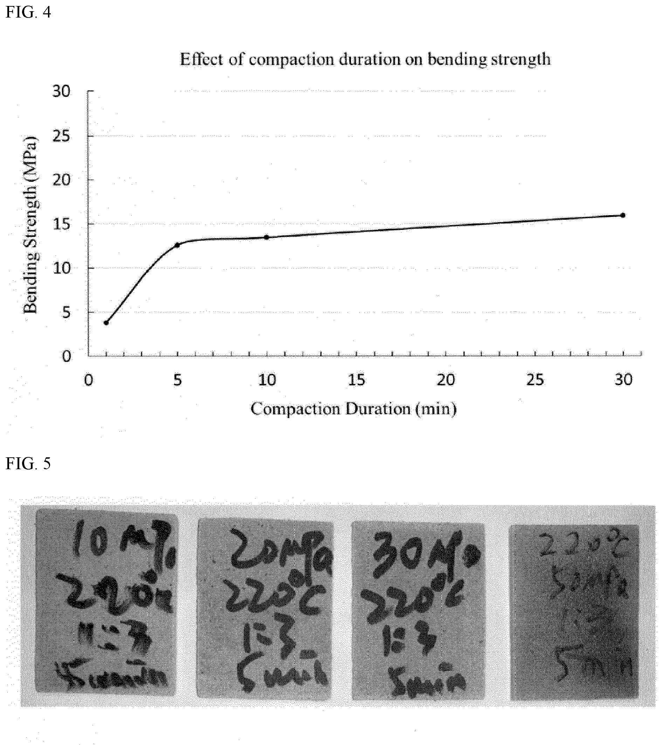

FIG. 3 shows an exterior photograph of the thus obtained heat-cured articles. On the surface of each heat-cured article shown in the photograph of FIG. 3, a note was written with a permanent marker for identification of the heat-cured article. The photograph shows, from the left, the heat-cured articles obtained by the 1-minute, 5-minute, 10-minute, or 30-minute heat treatment. Further, FIG. 4 shows the bending strength of the respective heat-cured articles. In the graph of FIG. 4, the abscissa and the ordinate indicate the heat treatment time and the bending strength, respectively. From these results, it was found that a heat-cured article having a sufficient strength can be obtained even with one-minute heating.

### (Example 6)

Crushed cement concrete (maximum particle size = 0.3 mm) in an amount of 4.00 g was mixed with 12.00 g of cedar chips (average particle size = 0.5 mm, water content = 10%). When the resulting mixture was put into a flat plate press mold and hot-pressed at 220°C for 5 minutes under a pressure of 10 MPa, 20 MPa, 30 MPa, or 50 MPa, a plate-form heat-cured article of about 5.00 mm in height, about 50.00 mm in width, and about 65.00 mm in length was obtained under all of these pressures.

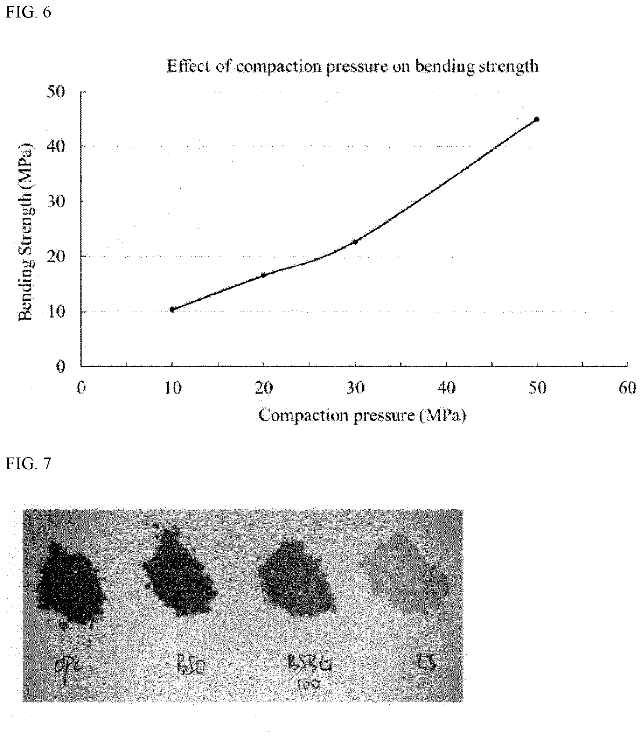

FIG. 5 shows an exterior photograph of the thus obtained heat-cured articles. On the surface of each heat-cured article shown in the photograph of FIG. 5, a note was written with a permanent marker for identification of the heat-cured article. The photograph shows, from the left, the heat-cured articles obtained by the heat treatment performed under a pressure of 10 MPa, 20 MPa, 30 MPa, or 50 MPa. Further, FIG. 6 shows the bending strength of the respective heat-cured articles. In the graph of FIG. 6, the abscissa and the ordinate indicate the pressure during the heat treatment and the bending strength, respectively. From these results, it was found that a heat-cured article having a sufficient strength can be obtained even under a pressure of 10 MPa.

### (Example 7)

Inorganic materials having the respective formulations shown in Table 1 below (mixtures shown in Table 1 that were each crushed into a particulate powder having a maximum particle size of 0.3 mm; FIG. 7 shows an exterior photograph of the particulate powders) in an amount of 8.00 g were each mixed with 8.00 g of cedar chips (average particle size = 0.5 mm, water content = 10%). When the resulting mixtures were each put into a flat plate press mold and hot-pressed at 200°C for 5 minutes under a pressure of 10 MPa, 20 MPa, 30 MPa, or 50 MPa, a plate-form heat-cured article of about 5.00 mm in height, about 50.00 mm in width, and about 65.00 mm in length was obtained under all of these pressures.

**[Table 1]**

| Name | Cement | | Water | | Sand | | Gravel | |
|---|---|---|---|---|---|---|---|---|
| | Unit(kg/m³) | | | | | | | |
| | OPC | BFS | W | AE | NS | BFSS | NG | BFSG |
| OPC-C | 431.8 | 0.0 | 161.7 | 1.1 | 759.8 | 0.0 | 953.9 | 0.0 |
| B50-C | 215.9 | 215.9 | 157.7 | 6.5 | 753.9 | 0.0 | 948.5 | 0.0 |
| BSBG100-C | 436.1 | 0.0 | 151.9 | 6.5 | 0.0 | 802.0 | 0.0 | 902.3 |
| LS-C | 478.0 | 0.0 | 191.0 | 0.0 | 727.0 | 0.0 | 955.0 | 0.0 |

OPC: ordinary Portland cement
BFS: blast-furnace slag fine powder
BFSS: blast-furnace slag fine aggregate
BFSG: blast-furnace slag coarse aggregate
W: water
AE: AE water reducing agent
LS: limestone
NS: crushed sand
NG: crushed rock

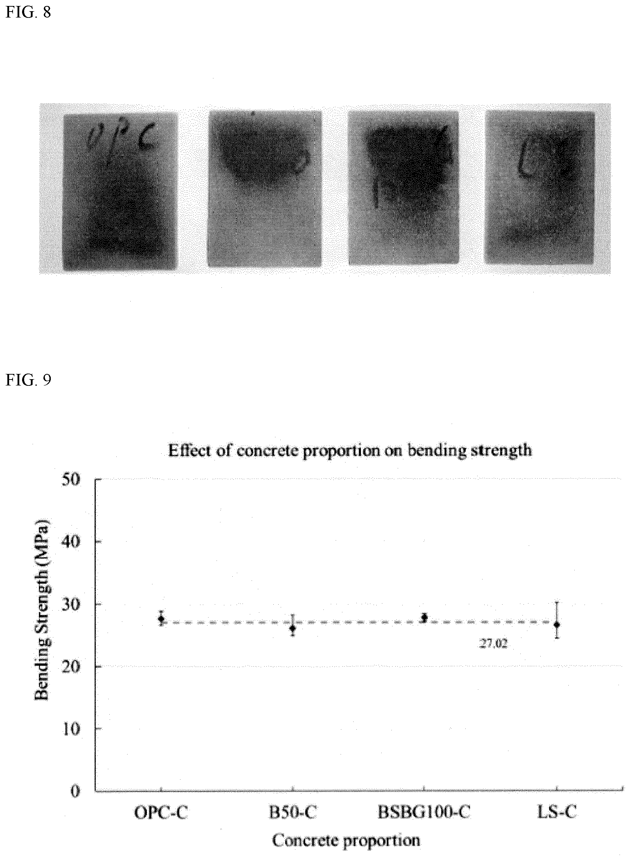

FIG. 8 shows an exterior photograph of the thus obtained heat-cured articles. On the surface of each heat-cured article shown in the photograph of FIG. 8, a note was written with a permanent marker for identification of the heat-cured article. The photograph shows, from the left, the heat-cured articles obtained by the heat treatment performed using the respective inorganic materials shown in Table 1 as OPC-C, B50-C, BSBG100-C, and LS-C. Further, FIG. 9 shows the bending strength of the respective heat-cured articles. In the graph of FIG. 9, the abscissa and the ordinate indicate the inorganic materials that were used and the bending strength, respectively. From these results, it was found that a heat-cured article having a sufficient strength can be obtained using a variety of inorganic materials.

### (Example 8)

Crushed cement concrete (maximum particle size = 0.3 mm) was mixed with cedar chips (maximum particle size = 1.0 mm, water content = 10%) at a weight ratio of 2:1 (10.67 g of the cement concrete and 5.33 g of the cedar chips), 1:1 (8.00 g of the cement concrete and 8.00 g of the cedar chips), or 1:2 (5.33 g of the cement concrete and 10.67 g of the cedar chips). When the resulting mixtures were each put into a flat plate press mold and hot-pressed at 200°C for 5 minutes under a pressure of 50 MPa, a plate-form heat-cured article of about 5.00 mm in height, about 50.0 mm in width, and about 65.00 mm in length was obtained from all of the mixtures.

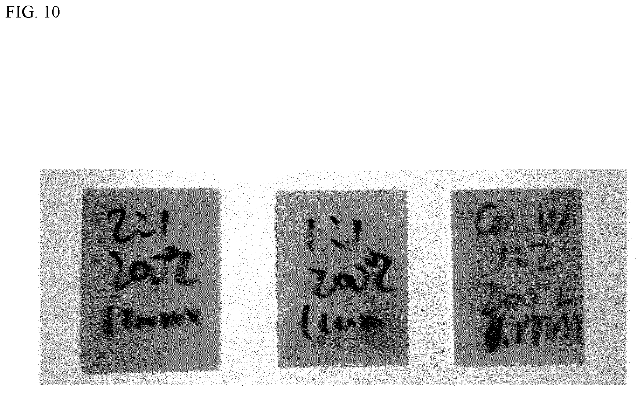

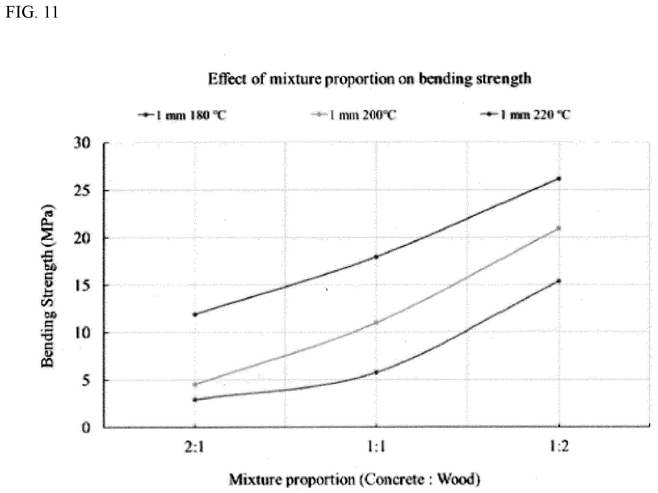

FIG. 10 shows an exterior photograph of the thus obtained heat-cured articles. On the surface of each heat-cured article shown in the photograph of FIG. 10, a note was written with a permanent marker for identification of the heat-cured article. The photograph shows, from the left, the heat-cured articles obtained from the materials having a ratio (cement concrete:cedar chips) of 2:1, 1:1, or 1:2. Further, FIG. 11 shows the bending strength of the respective heat-cured articles. In the graph of FIG. 11, the abscissa and the ordinate indicate the material proportion (cement concrete:cedar chips) and the bending strength, respectively. FIG. 11 also shows the results of a test in which the heating temperature was changed from 200°C to 180°C or 220°C. The bottommost line graph of FIG. 11 represents the bending strength of the heat-cured articles obtained at a heating temperature of 180°C. The line graph thereabove represents the bending strength of the heat-cured articles obtained at a heating temperature of 200°C. The uppermost line graph represents the bending strength of the heat-cured articles obtained at a heating temperature of 220°C. From these results, it was found that a heat-cured article having a sufficient strength can be obtained at various material proportions.

### (Example 9)

Heat-cured articles were produced and their bending strengths were measured in the same manner as in Example 8, except that the maximum particle size of the cedar chips was changed from 1.0 mm to 0.5 mm.

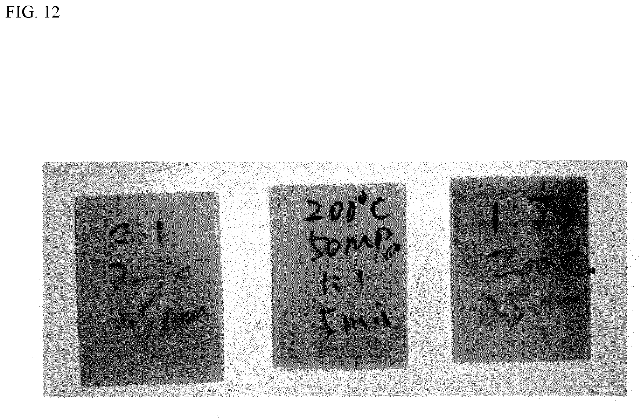

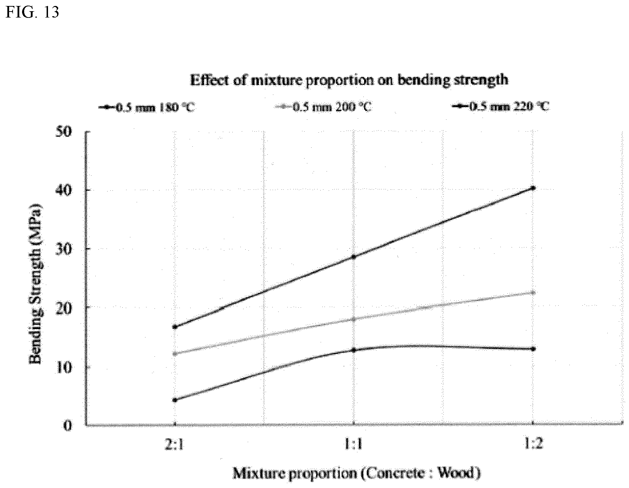

FIG. 12 shows an exterior photograph of the thus obtained heat-cured articles. On the surface of each heat-cured article shown in the photograph of FIG. 12, a note was written with a permanent marker for identification of the heat-cured article. The photograph shows, from the left, the heat-cured articles obtained from the materials having a ratio (cement concrete:cedar chips) of 2:1, 1:1, or 1:2. Further, FIG. 13 shows the bending strength of the respective heat-cured articles. In the graph of FIG. 13, the abscissa and the ordinate indicate the material proportion (cement concrete:cedar chips) and the bending strength, respectively. FIG. 13 also shows the results of a test in which the heating temperature was changed from 200°C to 180°C or 220°C. The bottommost line graph of FIG. 13 represents the bending strength of the heat-cured articles obtained at a heating temperature of 180°C. The line graph thereabove represents the bending strength of the heat-cured articles obtained at a heating temperature of 200°C. The uppermost line graph represents the bending strength of the heat-cured articles obtained at a heating temperature of 220°C. From these results, it was found that a heat-cured article having a sufficient strength can be obtained at various material proportions.

### (Example 10)

Heat-cured articles were produced and their bending strengths were measured in the same manner as in Example 8, except that the maximum particle size of the cedar chips was changed from 1.0 mm to 0.178 mm.

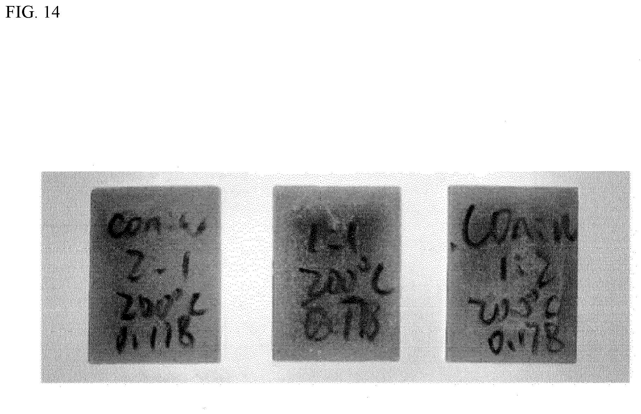

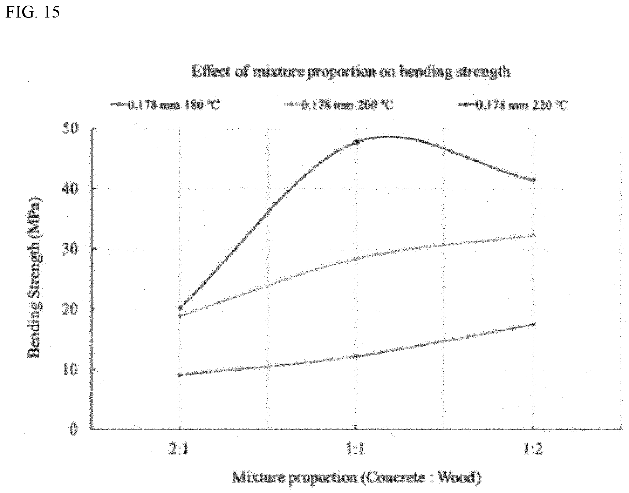

FIG. 14 shows an exterior photograph of the thus obtained heat-cured articles. On the surface of each heat-cured article shown in the photograph of FIG. 14, a note was written with a permanent marker for identification of the heat-cured article. The photograph shows, from the left, the heat-cured articles obtained from the materials having a ratio (cement concrete:cedar chips) of 2:1, 1:1, or 1:2. Further, FIG. 15 shows the bending strength of the respective heat-cured articles. In the graph of FIG. 15, the abscissa and the ordinate indicate the material proportion (cement concrete:cedar chips) and the bending strength, respectively. FIG. 15 also shows the results of a test in which the heating temperature was changed from 200°C to 180°C or 220°C. The bottommost line graph of FIG. 15 represents the bending strength of the heat-cured articles obtained at a heating temperature of 180°C. The line graph thereabove represents the bending strength of the heat-cured articles obtained at a heating temperature of 200°C. The uppermost line graph represents the bending strength of the heat-cured articles obtained at a heating temperature of 220°C. From these results, it was found that a heat-cured article having a sufficient strength can be obtained at various material proportions.

## Claims

1. A water-impermeable cured article, comprising:
an inorganic material; and
at least one selected from lignin and cellulose.

2. The water-impermeable cured article according to claim 1, wherein the at least one selected from lignin and cellulose is derived from a plant.

3. The water-impermeable cured article according to claim 1 or 2, wherein the inorganic material comprises a calcium compound.

4. The water-impermeable cured article according to any one of claims 1 to 3, wherein the inorganic material comprises particles of at least one selected from cement concrete, sand, slag, and fly ash.

5. A heat-cured article, comprising:
an inorganic material; and
at least one selected from lignin and cellulose.

6. A method of producing a cured article, the method comprising:
mixing an inorganic material with a raw material comprising at least one selected from lignin and cellulose; and
heating the resulting mixture.

7. A method of producing a cured article, the method comprising:
mixing an inorganic material with a raw material comprising at least one selected from lignin and cellulose; and
pressurizing the resulting mixture.

8. The method of producing a cured article according to claim 6 or 7, wherein water is added to the inorganic material and the raw material comprising at least one selected from lignin and cellulose.

9. The method of producing a cured article according to any one of claims 6 to 8, wherein heating is performed with pressurization.

10. The method of producing a cured article according to claim 6, wherein the heating temperature is 140 to 240°C.

11. A building material, comprising the water-impermeable cured article according to any one of claims 1 to 4.

12. A building material, comprising the heat-cured article according to claim 5.
